# EUROPEAN PATENT APPLICATION

(11) **EP 4 712 671 A1**
(43) Date of publication of application: **18.03.2026**
(21) Application number: 24802692.4
(22) Date of filing: 12.04.2024
(51) Int. Cl.: H04W 76/11

(54) **DIRECT COMMUNICATION INTERFACE MESSAGE TRANSMISSION METHOD AND APPARATUS**

(30) Priority: 11.05.2023 CN 202310531981
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2024/087464
(87) International publication number: WO 2024/230406

(57) **Abstract**

The present disclosure relates to the technical field of communications. Provided are a sidelink interface message transmission method and apparatus. The method comprises: sending a first message to a network device, wherein the first message comprises a destination layer 2 (L2) identity of a relay terminal and an end-to-end identifier used for distinguishing different end-to-end connections between a first terminal and a second terminal; the relay terminal is a relay terminal between the first terminal and the second terminal; there is an end-to-end connection between the first terminal and the second terminal; and there are one or more second terminals.

## Description

### CROSS-REFERENCES TO RELATED APPLICATIONS

The present application claims priority to Chinese patent application No. 202310531981.1 filed on May 11, 2023, entitled "Direct Communication Interface Message Transmission Method and Apparatus", which is hereby incorporated by reference in its entirety.

### FIELD

The present application relates to the field of communications, and in particular, to methods and apparatuses for sidelink interface message transmission.

### BACKGROUND

Direct communication refers to a communication way in which adjacent terminals may transmit data within a short distance through a direct communication link (also known as a sidelink or PC5). To expand coverage of the direct communication, a user equipment (UE)-to-UE relay (U2U relay, that is, a terminal to a relay terminal) is introduced, that is, two terminals in direct communication transmit data through a relay terminal. The relay terminal is a terminal with relay functionality.

Traditionally, in case that a terminal performs an end-to-end transmission with a target communication peer, according to mechanisms in the related art, the terminal only reports a sidelink interface layer 2 (L2) identifier of the relay terminal and a quality of service (QoS) profile corresponding to a service of the sidelink interface to the network device, which may lead to an end-to-end transmission failure.

### BRIEF SUMMARY

Embodiments of the present application provide methods and apparatuses for sidelink interface message transmission, which may ensure that QoS flows with a same QoS profile may be accurately mapped to different sidelink interface bearers and/or logical channels under different end-to-end connections, improving a success rate of end-to-end transmission.

An embodiment of the present application provides a method for sidelink interface message transmission, performed by a first terminal, including:
sending a first message to a network device, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the method further includes:
receiving configuration information for a target object of a sidelink interface sent from the network device, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

In an embodiment, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

In an embodiment, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

In an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment, the first message is at least one of:
a sidelink (SL) user equipment message;
a user equipment assistance message; or
other additionally introduced messages.

In an embodiment, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

In an embodiment, sending the first message to the network device includes:
in case of determining that the first terminal establishes an end-to-end connection with the second terminal through the relay terminal, sending the first message to the network device,
where the end-to-end connection includes a PC5-S connection or a PC5-radio resource control (RRC) connection.

An embodiment of the present application further provides a method for sidelink interface message transmission, performed by a network device, including:
receiving a first message sent from a first terminal, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the method further includes:
sending configuration information for a target object of a sidelink interface to the first terminal, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

In an embodiment, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

In an embodiment, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

In an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment, the first message is at least one of:
a sidelink (SL) user equipment message;
a user equipment assistance message; or
other additionally introduced messages.

In an embodiment, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

An embodiment of the present application further provides a first terminal, including a memory, a transceiver and a processor,
where the memory is used for storing a computer program, the transceiver is used for receiving and sending data under control of the processor, and the processor is used for reading the computer program in the memory and performing following operations:
sending a first message to a network device, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the processor is further used for performing following operations:
receiving configuration information for a target object of a sidelink interface sent from the network device, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

In an embodiment, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

In an embodiment, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

In an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment, the first message is at least one of:
a sidelink (SL) user equipment message;
a user equipment assistance message; or
other additionally introduced messages.

In an embodiment, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

In an embodiment, sending the first message to the network device includes:
in case of determining that the first terminal establishes an end-to-end connection with the second terminal through the relay terminal, sending the first message to the network device,
where the end-to-end connection includes a PC5-S connection or a PC5-radio resource control (RRC) connection.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing following operations:
receiving a first message sent from a first terminal, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the processor is further used for performing following operations:
sending configuration information for a target object of a sidelink interface to the first terminal, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

In an embodiment, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

In an embodiment, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

In an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment, the first message is at least one of:
a sidelink (SL) user equipment message;
a user equipment assistance message; or
other additionally introduced messages.

In an embodiment, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

An embodiment of the present application further provides an apparatus for sidelink interface message transmission, for use in a first terminal, including:
a sending unit, used for sending a first message to a network device, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the apparatus further includes:
a receiving unit, used for receiving configuration information for a target object of a sidelink interface sent from the network device, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

In an embodiment, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

In an embodiment, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

In an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment, the first message is at least one of:
a sidelink (SL) user equipment message;
a user equipment assistance message; or
other additionally introduced messages.

In an embodiment, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

In an embodiment, sending the first message to the network device includes:
in case of determining that the first terminal establishes an end-to-end connection with the second terminal through the relay terminal, sending the first message to the network device,
where the end-to-end connection includes a PC5-S connection or a PC5-radio resource control (RRC) connection.

An embodiment of the present application further provides an apparatus for sidelink interface message transmission, for use in a network device, including:
a receiving unit, used for receiving a first message sent from a first terminal, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the apparatus further includes:
a sending unit, used for sending configuration information for a target object of a sidelink interface to the first terminal, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

In an embodiment, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

In an embodiment, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

In an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment, the first message is at least one of:
a sidelink (SL) user equipment message;
a user equipment assistance message; or
other additionally introduced messages.

In an embodiment, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

An embodiment of the present application further provides a processor-readable storage medium storing a computer program, where the computer program is used for causing a processor to perform any of the methods performed by the first terminal described above, or perform any of the methods performed by the network device described above.

In the methods and apparatuses for sidelink interface message transmission provided by the embodiments of the present application, a first terminal sends a first message to a network device, where the first message includes a destination layer 2 (L2) identity of a relay terminal, and an end-to-end identifier used to distinguish different end-to-end connections between the first terminal and a second terminal, where the relay terminal is a relay terminal between the first terminal and the second terminal, an end-to-end connection exists between the first terminal and the second terminal, and a number of the second terminal is one or more. As such, by sending the end-to-end identifiers of different end-to-end connections to the network device, the network device may accurately identify, in combination with the end-to-end identifier, data that passes through a same relay terminal but is sent to different destination L2 identities of target communication peers. This ensures that QoS flows with a same QoS profile under different end-to-end connections may be accurately mapped to different sidelink interface bearers and/or sidelink interface logical channels, ensuring that an adaptation layer may add a correct adaptation layer header, and improving a success rate of end-to-end transmission.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a schematic diagram of different end-to-end connections according to an embodiment of the present application;
FIG. 2 is a first schematic flowchart of a method for sidelink interface message transmission according to an embodiment of the present application;
FIG. 3 is a second schematic flowchart of a method for sidelink interface message transmission according to an embodiment of the present application;
FIG. 4 is a third schematic flowchart of a method for sidelink interface message transmission according to an embodiment of the present application;
FIG. 5 is a schematic structural diagram of a first terminal according to an embodiment of the present application;
FIG. 6 is a schematic structural diagram of a network device according to an embodiment of the present application;
FIG. 7 is a first schematic structural diagram of an apparatus for sidelink interface message transmission according to an embodiment of the present application; and
FIG. 8 is a second schematic structural diagram of an apparatus for sidelink interface message transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, for example, 5G systems.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

To expand coverage of direct communication, a user equipment (UE)-to-UE relay (U2U relay, that is, a terminal to a relay terminal) is introduced, that is, two terminals in direct communication transmit data through a relay terminal. The relay terminal is a terminal with relay functionality.

Traditionally, in case that a terminal performs an end-to-end transmission with a target communication peer, according to mechanisms in the related art, the terminal only reports a sidelink interface layer 2 (L2) identifier of the relay terminal and a quality of service (QoS) profile corresponding to a service of the sidelink interface to the network device; and the network device configures a sidelink interface bearer and/or a logical channel between the terminal and the relay terminal based on the sidelink interface L2 identifier of the relay terminal and the QoS profile corresponding to the service of the sidelink interface.

However, for a scenario where an end-to-end communication is performed through a relay terminal, for example, between a terminal and a target communication peer, different end-to-end connections exist. For example, a scenario where different end-to-end connections exist between a terminal and a target communication peer is as follows: multiple different end-to-end connections exist between the terminal and a same target communication peer, each of the different end-to-end connections corresponding to a different combination of a source L2 identity and a destination L2 identity. The different combinations of the source L2 identity and the destination L2 identity may be that the source L2 identity is different, the destination L2 identity is different, or both the source L2 identity and the destination L2 identity are different.

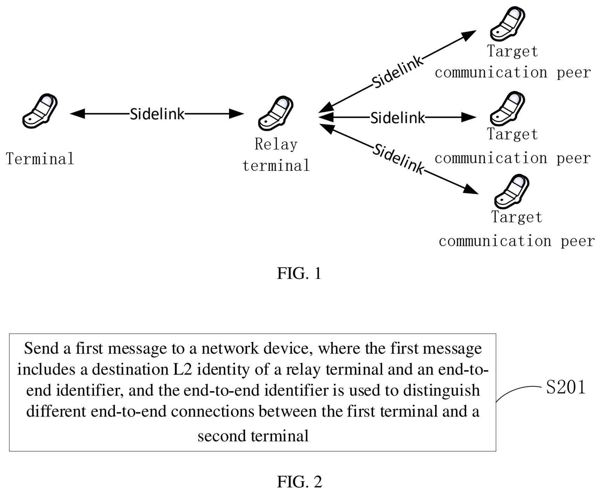

Another scenario where different end-to-end connections exist between a terminal and a target communication peer is as follows: multiple different end-to-end connections exist between the terminal and different target communication peers, each of the different end-to-end connections corresponding to a different combination of a source L2 identity and a destination L2 identity. The different combinations of the source L2 identity and the destination L2 identity may be that the source L2 identity is different, the destination L2 identity is different, or both the source L2 identity and the destination L2 identity are different. For example, it may be referred to FIG. 1. FIG. 1 is a schematic diagram of different end-to-end connections according to an embodiment of the present application. The number of target communication peers in the schematic diagram is multiple, and each target communication peer may correspond to one or more destination L2 identities, which is not limited here. There are multiple different end-to-end connections between the terminal and the target communication peer.

In the above scenario where there are different end-to-end connections, if the transmission way of the sidelink interface message provided in the related art is still used, that is, the terminal only reports the sidelink interface L2 identifier of the relay terminal and the QoS profile corresponding to the service of the sidelink interface to the network device through a sidelink interface terminal message (SidelinkUEInformation), under different end-to-end connections, QoS flows with a same QoS profile are mapped to a same sidelink interface bearer and/or a logical channel, and it cannot be guaranteed that an adaptation layer may add a correct adaptation layer header, which leads to an end-to-end transmission failure.

To solve the above problem, it is possible to consider distinguishing different end-to-end connections between the terminal and the target communication peer, and sending an end-to-end identifier for distinguishing the different end-to-end connections to the network device. The network device may identify, in combination with the end-to-end identifier, data that passes through a same relay terminal but is sent to destination L2 identities of different target communication peers, ensuring that under different end-to-end connections, the QoS flows of the same QoS profile may be accurately mapped to different sidelink interface bearers and/or logical channels to ensure that the adaptation layer may add the correct adaptation layer header, which improves a success rate of end-to-end transmission.

An embodiment of the present application provides a method for sidelink interface message transmission. The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

FIG. 2 is a first schematic flowchart of a method for sidelink interface message transmission according to an embodiment of the present application. This method is performed by a first terminal. For example, as shown in FIG. 2 , this method includes:
S201: send a first message to a network device, where the first message includes a destination layer 2 (L2) identity of a relay terminal and an end-to-end identifier, and the end-to-end identifier is used to distinguish different end-to-end connections between the first terminal and a second terminal.

In an embodiment, the relay terminal is a relay terminal between the first terminal and the second terminal. An end-to-end connection exists between the first terminal and the second terminal, and a number of the second terminal is one or more.

In an embodiment, in case that the number of the second terminals is one, a corresponding scenario is that: an end-to-end connection exists between the first terminal and the second terminal, and the second terminal has multiple different destination L2 identities. In addition, a source L2 identity corresponding to the first terminal under different end-to-end connections of the first terminal may be the same or different, resulting in multiple different end-to-end connections between the first terminal and the second terminal.

In case that the number of the second terminals is more than one, a corresponding scenario is that: an end-to-end connection exists between the first terminal and multiple second terminals, and each second terminal may have one destination L2 identity or multiple destination L2 identities, which is not limited here. In addition, a source L2 identities corresponding to the first terminal under different end-to-end connections of the first terminal may be the same or different, resulting in multiple different end-to-end connections between the first terminal and the second terminal.

For example, in an embodiment of the present application, in addition to the destination L2 identity of the relay terminal and the end-to-end identifier, the first message may also include information such as a QoS profile corresponding to an end-to-end QoS flow, or a frequency of interest, etc. The information may be configured according to actual needs. The content included in the first message is not limited in the embodiments of the present application.

In an embodiment, the first terminal sends the first message to the network device, where the first message includes the destination L2 identity of the relay terminal and the end-to-end identifier used to distinguish different end-to-end connections between the first terminal and the second terminal. This allows the network device to accurately identify, in combination with the end-to-end identifiers of the different end-to-end connections, data that passes through the same relay terminal but is sent to different target communication peers, ensuring that QoS flows with the same QoS profile under different end-to-end connections may be accurately mapped to different sidelink interface bearers and/or logical channels to ensure that the adaptation layer may add the correct adaptation layer header, which improves the success rate of end-to-end transmission.

Based on the above embodiment shown in FIG. 2, for example, in an embodiment of the present application, the first message is at least one of:
a sidelink (SL) user equipment message (SidelinkUEInformation);
a user equipment assistance message (UEAssistanceInformation); or
other additionally introduced messages.

In an embodiment, the other additionally introduced messages may be configured according to actual needs. The other additionally introduced messages are not limited in the embodiments.

In combination with the above description, in an embodiment, because the end-to-end identifier for distinguishing different end-to-end connections between the first terminal and the second terminal is sent to the network device through the first message, it is ensured that under different end-to-end connections, the QoS flows of the same QoS profile may be accurately mapped to different sidelink interface bearers and/or logical channels, to ensure that the adaptation layer may add the correct adaptation layer header, improving the success rate of end-to-end transmission. For example, in an embodiment of the present application, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the transmission type is an end-to-end direct communication type, and the identifier of the end-to-end connection between the first terminal and the second terminal includes a combination of a source L2 identity of the first terminal and a destination L2 identity of the second terminal.

For example, in an embodiment of the present application, the local identifier corresponding to the destination L2 identity of the second terminal may be an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

Generally, the destination L2 identity of the second terminal is 24 bits. In case of obtaining the local identifier corresponding to the destination L2 identity of the second terminal by truncating, a portion of bits, such as 8 bits, may be extracted from the 24 bits, and the 8-bit identifier may be used as the local identifier corresponding to the destination L2 identity of the second terminal. The 8 bits may be the first 8 bits of the 24 bits, the middle 8 bits of the 24 bits, or the last 8 bits of the 24 bits. The 8 bits may also be 8 bits arbitrarily extracted from the 24 bits. The specific setting may be made according to actual needs, as long as the destination L2 identity of the second terminal may be uniquely identified. The specific truncating way is not further limited in the embodiments of the present application.

In case of obtaining the local identifier corresponding to the destination L2 identity of the second terminal through mapping, the 24-bit destination L2 identity of the second terminal may be mapped to an identifier with fewer than 24 bits through a certain mapping relationship, serving as the local identifier corresponding to the destination L2 identity of the second terminal. For example, the 24-bit destination L2 identity of the second terminal may be mapped to an 8-bit identifier. The specific mapping way may be set according to actual needs, as long as the destination L2 identity of the second terminal may be uniquely identified. The specific mapping way is not further limited in the embodiments of the present application.

In an embodiment, in combination with the above description, the end-to-end identifier may include a variety of different contents. For example, the end-to-end identifier may include the destination L2 identity of the second terminal; the end-to-end identifier may also include the destination L2 identity of the second terminal, and the transmission type corresponding to the end-to-end communication between the first terminal and the second terminal; the end-to-end identifier may also include the local identifier corresponding to the destination L2 identity of the second terminal; the end-to-end identifier may also include the local identifier corresponding to the destination L2 identity of the second terminal, and the transmission type corresponding to the end-to-end communication between the first terminal and the second terminal; the end-to-end identifier may also include the identifier of the end-to-end connection between the first terminal and the second terminal; the end-to-end identifier may also include the local identifier corresponding to the identifier of the end-to-end connection between the first terminal and the second terminal, etc., where the transmission type may be broadcast, groupcast, unicast or multicast. For the end-to-end identifier, it may be specifically configured according to actual needs. The embodiment is only described by taking the multiple different contents above as an example, but it does not mean that the embodiment is limited to this.

For example, in an embodiment of the present application, the identifier of the end-to-end connection between the first terminal and the second terminal may include, in addition to a combination of the source L2 identity of the first terminal and the destination L2 identity of the second terminal, at least one of the transmission type corresponding to the end-to-end communication between the first terminal and the second terminal, or a local identifier corresponding to the combination of the source L2 identity of the first terminal and the destination L2 identity of the second terminal. That is, the identifier of the end-to-end connection between the first terminal and the second terminal may include a variety of different contents.

For example, in a possible way, the identifier of the end-to-end connection between the first terminal and the second terminal may include a combination of the source L2 identity of the first terminal and the destination L2 identity of the second terminal.

In another possible way, the identifier of the end-to-end connection between the first terminal and the second terminal may include a combination of the source L2 identity of the first terminal and the destination L2 identity of the second terminal, and a transmission type corresponding to the end-to-end communication between the first terminal and the second terminal, where the transmission type may be broadcast, groupcast, unicast, or multicast.

In another possible way, the identifier of the end-to-end connection between the first terminal and the second terminal may include a local identifier corresponding to the combination of the source L2 identity of the first terminal and the destination L2 identity of the second terminal.

In another possible way, the identifier of the end-to-end connection between the first terminal and the second terminal may include a local identifier corresponding to the combination of the source L2 identity of the first terminal and the destination L2 identity of the second terminal, and a transmission type corresponding to the end-to-end communication between the first terminal and the second terminal, where the transmission type may be broadcast, groupcast, unicast, or multicast.

For example, in an embodiment, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

In an embodiment of the present application, the way of truncating or mapping the identifier of the end-to-end connection is similar to the way of truncating or mapping the destination L2 identity of the second terminal above. Reference may be made to the description of the truncating or mapping of the destination L2 identity of the second terminal above. The embodiments of the present application do not elaborate on this here.

For example, in an embodiment of the present application, the serial number of the end-to-end connection may be determined by the first terminal itself, as long as the serial numbers of different end-to-end connections are unique.

Based on the embodiment shown in FIG. 2, for example, before sending a first message to a network device, the first terminal may first determine whether the first terminal has established an end-to-end connection with the second terminal through the relay terminal. In case of determining that the first terminal has established an end-to-end connection with the second terminal through the relay terminal, the first terminal sends the first message to the network device, which may effectively avoid sending the first message to the network device in case that the first terminal has not established an end-to-end connection with the second terminal through the relay terminal, saving network transmission resources and reducing power consumption of the first terminal.

The end-to-end connection includes a PC5-S connection or a PC5-radio resource control (RRC) connection.

The above content describes in detail that the sidelink interface resource between the terminal and the relay terminal may be accurately configured. The first terminal sends a first message including the destination layer 2 (L2) identity of the relay terminal and the end-to-end identifier to the network device. The network device may identify, in combination with the end-to-end identifier, data passes through a same relay terminal but is sent to destination L2 identities of different target communication peers. This ensures that QoS flows with a same QoS profile under different end-to-end connections may be accurately mapped to different sidelink interface bearers and/or sidelink interface logical channels, ensuring that an adaptation layer may add a correct adaptation layer header, and improving a success rate of end-to-end transmission.

Based on the above embodiment shown in FIG. 2, for example, in an embodiment of the present application, after sending the first message to the network device, the first terminal may also receive configuration information for a target object of a sidelink interface sent from the network device, where the configuration information includes a quality of service (QoS) flow identifier, and QoS flows with a same QoS flow identifier but different end-to-end identifiers are mapped to different target objects, where the target object includes at least one of:
a sidelink interface bearer;
a sidelink interface logical channel; or
a sidelink interface PC5 radio link control (RLC) channel.

For example, in an embodiment of the present application, the configuration information above further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal, and a target object of a sidelink interface between the relay terminal and the second terminal.

For example, in an embodiment of the present application, the end-to-end target object between the first terminal and the second terminal may include at least one of:
an end-to-end bearer;
an end-to-end logical channel; or
an end-to-end PC5 radio link control (RLC) channel.

For example, in an embodiment of the present application, the target object of the sidelink interface between the first terminal and the relay terminal includes at least one of:
a sidelink interface bearer between the first terminal and the relay terminal;
a sidelink interface logical channel between the first terminal and the relay terminal; or
a sidelink interface PC5 radio link control (RLC) channel between the first terminal and the relay terminal.

For example, in an embodiment of the present application, the target object of the sidelink interface between the relay terminal and the second terminal includes at least one of:
a sidelink interface bearer between the relay terminal and the second terminal;
a sidelink interface logical channel between the relay terminal and the second terminal; or
a sidelink interface PC5 radio link control (RLC) channel between the relay terminal and the second terminal.

In an embodiment, after sending the first message to the network device, the first terminal may also receive the configuration information for the target object of the sidelink interface sent from the network device. This allows the first terminal to report a sidelink (SL) buffer status report (BSR) based on the received configuration information, and receive the sidelink interface resources between the terminal and the relay terminal configured by the network device based on the reported SL BSR, ensuring that data transmission may be proceed normally.

To facilitate understanding, the method for sidelink interface message transmission is described in detail below, in combination with whether the network configuration information signaling needs to be enhanced.

### Embodiment 1

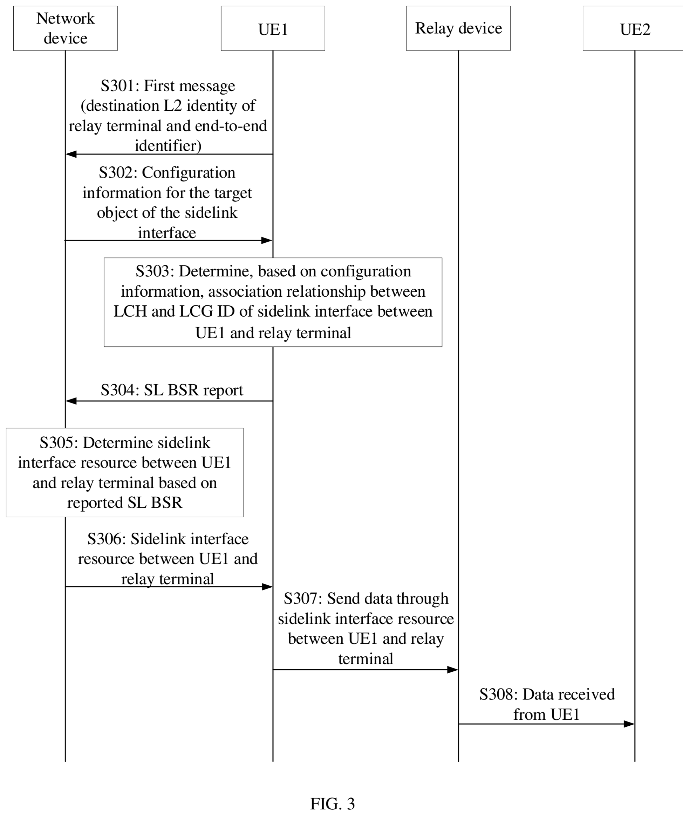

FIG. 3 is a second schematic flowchart of a method for sidelink interface message transmission according to an embodiment of the present application. Referring to FIG. 3, UE1 is the first terminal described in the above embodiments, UE2 is the second terminal described in the above embodiments, and the network device is a network device serving UE1. The method for sidelink interface message transmission may include following steps.

S301: UE1 sends a first message to the network device, where the first message includes a destination layer 2 (L2) identity of a relay terminal and an end-to-end identifier, and the end-to-end identifier is used for distinguishing different end-to-end connections between the first terminal and the second terminal.

The relay terminal is a relay terminal between the first terminal and the second terminal, an end-to-end connection exists between the first terminal and the second terminal, and the number of the second terminals is one or more.

For example, in an embodiment of the present application, in addition to the destination L2 identity of the relay terminal and the end-to-end identifier, the first message may also include information such as a QoS profile of an end-to-end QoS flow, a frequency of interest, etc. The information may be configured according to actual needs. The content included in the first message is not limited in the embodiments of the present application.

For example, in an embodiment of the present application, the first message is at least one of:
SidelinkUEInformation;
UEAssistanceInformation; or
other additionally introduced messages.

For example, in an embodiment of the present application, the end-to-end identifier may include the destination L2 identity of UE2; the end-to-end identifier may also include the destination L2 identity of UE2 and the transmission type corresponding to the end-to-end communication between UE1 and UE2; the end-to-end identifier may also include the local identifier corresponding to the destination L2 identity of UE2; the end-to-end identifier may also include the local identifier corresponding to the destination L2 identity of UE2, and the transmission type corresponding to the end-to-end communication between UE1 and UE2; the end-to-end identifier may also include the identifier of the end-to-end connection between UE1 and UE2; the end-to-end identifier may also include the local identifier corresponding to the identifier of the end-to-end connection between UE1 and UE2, etc., which may be specifically configured according to actual needs. The embodiment is only described by taking the multiple different contents above as an example, but it does not mean that the embodiment is limited to this.

For example, in an embodiment of the present application, the identifier of the end-to-end connection between UE1 and UE2 may include a combination of the source L2 identity of UE1 and the destination L2 identity of UE2; the identifier of the end-to-end connection between UE1 and UE2 may also include a combination of the source L2 identity of UE1 and the destination L2 identity of UE2, and the transmission type corresponding to the end-to-end communication between UE1 and UE2; the identifier of the end-to-end connection between UE1 and UE2 may also include a local identifier corresponding to the a combination of a source L2 identity of UE1 and a destination L2 identity of UE2; the identifier of the end-to-end connection between UE1 and UE2 may also include a local identifier corresponding to the combination of a source L2 identity of UE1 and a destination L2 identity of UE2, and a transmission type corresponding to the end-to-end communication between UE1 and UE2.

For example, before sending the first message to the network device, UE1 may first determine whether UE1 has established an end-to-end connection with UE2 through the relay terminal. In case of determining that UE1 has established an end-to-end connection with UE2 through the relay terminal, UE1 sends the first message to the network device, which may effectively avoid sending the first message to the network device in case that UE1 has not established an end-to-end connection with UE2 through the relay terminal, saving network transmission resources and reducing power consumption of the first terminal. The end-to-end connection includes a PC5-S connection or a PC5-radio resource control (RRC) connection.

As such, the end-to-end identifiers of different end-to-end connections are sent to the network device, which allows the network device to accurately identify, in combination with the end-to-end identifiers, data that passes through a same relay terminal but is sent to different destination L2 identities of target communication peers. This ensures that QoS flows with a same QoS profile under different end-to-end connections may be accurately mapped to different sidelink interface bearers and/or sidelink interface logical channels, ensuring that an adaptation layer may add a correct adaptation layer header, and improving a success rate of end-to-end transmission.

S302: the network device sends configuration information for the target object of the sidelink interface to UE1.

The configuration information includes a quality of service (QoS) flow identifier, and QoS flows with the same QoS flow identifier but different end-to-end identifiers are mapped to different target objects.

After receiving the first message sent from UE1, where the first message includes a destination layer 2 (L2) identity of a relay terminal and an end-to-end identifier, the network device may determine the configuration information for the target object of the sidelink interface based on the destination layer 2 (L2) identity of the relay terminal and the end-to-end identifier.

For example, the configuration information may also include configuration information of the end-to-end target object between UE1 and UE2, and/or configuration information of the target object of the sidelink interface between the first terminal and the relay terminal. The configuration information may be configured according to actual needs.

It should be noted that the network device may configure different identifiers for end-to-end target objects corresponding to different end-to-end identifiers, to uniquely identify the end-to-end target objects corresponding to the different end-to-end identifiers.

S303: UE1 determines, based on the configuration information, an association relationship between a downlink logical channel (LCH) and a logical channel group (LCG) identifier (ID) of the sidelink interface between UE1 and the relay terminal.

It should be noted that, in an embodiment of the present application, for the method by which UE1 determines, based on the configuration information, an association relationship between an LCH and an LCG ID of the sidelink interface between UE1 and the relay terminal, reference may be made to the related art regarding a description of determining, based on the configuration information, an association relationship between an LCH and an LCG ID of the sidelink interface between UE1 and the relay terminal, which is not further described in the embodiments of the present application.

S304: the UE reports an SL BSR to the network device based on the determined association relationship between the LCH and the LCG ID of the sidelink interface between UE1 and the relay terminal.

S305: the network device determines a sidelink interface resource between UE1 and the relay terminal based on the reported SL BSR.

It should be noted that, in an embodiment of the present application, for the method by which the network device determines the sidelink interface resource between UE1 and the relay terminal based on the reported SL BSR, reference may be made to the related art regarding a description of determining the sidelink interface resource between UE1 and the relay terminal based on the reported SL BSR, which is not further described in the embodiments of the present application.

In combination with the description of S301-S305 above, UE1 sends a first message to the network device, where the first message includes a destination layer 2 (L2) identity of a relay terminal and an end-to-end identifier, and the end-to-end identifier is used to distinguish different end-to-end connections between UE1 and UE2. The network device may accurately identify, in combination with the end-to-end identifier, data passes through a same relay terminal but sent to different destination L2 identities of target communication peers, and specifically determine and send configuration information for a target object of a sidelink interface to UE1 based on the destination layer 2 (L2) identity of a relay terminal and an end-to-end identifier. The UE reports the SL BSR to the network device, and the corresponding network device determines the sidelink interface resource between UE1 and the relay terminal based on the reported SL BSR. The sidelink interface resource between the terminal and the relay terminal may be accurately configured.

S306: the network device sends the sidelink interface resource between UE1 and the relay terminal to UE1.

S307: UE1 transmits data to the relay terminal through the sidelink interface resource between UE1 and the relay terminal.

S308: the relay terminal forwards the data received from UE1 to UE2, achieving the end-to-end communication between UE1 and UE2.

### Embodiment 2

An embodiment of the present application provides a method for sidelink interface message transmission. For example, the method may be combined with FIG. 3, where UE1 is the first terminal described in the above embodiments, U2 is the second terminal described in the above embodiments, and the network device is a network device serving UE1. The method for sidelink interface message transmission may include following steps.

Step 1: UE1 sends a first message to the network device, where the first message includes a destination layer 2 (L2) identity of a relay terminal and an end-to-end identifier, and the end-to-end identifier is used to distinguish different end-to-end connections between the first terminal and a second terminal.

The relay terminal is a relay terminal between the first terminal and the second terminal, an end-to-end connection exists between the first terminal and the second terminal, and a number of the second terminal is one or more.

For example, in an embodiment of the present application, in addition to the destination L2 identity of the relay terminal and the end-to-end identifier, the first message may also include information such as a QoS profile of an end-to-end QoS flow, a frequency of interest, etc. The information may be configured according to actual needs. The content included in the first message is not limited in the embodiments of the present application.

For example, in the embodiment, the first message is at least one of:
SidelinkUEInformation;
UEAssistanceInformation; or
other additionally introduced messages.

For example, in an embodiment of the present application, the end-to-end identifier may include the destination L2 identity of UE2; the end-to-end identifier may also include the destination L2 identity of UE2 and the transmission type corresponding to the end-to-end communication between UE1 and UE2; the end-to-end identifier may also include the local identifier corresponding to the destination L2 identity of UE2; the end-to-end identifier may also include the local identifier corresponding to the destination L2 identity of UE2, and the transmission type corresponding to the end-to-end communication between UE1 and UE2; the end-to-end identifier may also include the identifier of the end-to-end connection between UE1 and UE2; the end-to-end identifier may also include the local identifier corresponding to the identifier of the end-to-end connection between UE1 and UE2, etc., which may be specifically configured according to actual needs. The embodiment is only described by taking the multiple different contents above as an example, but it does not mean that the embodiment is limited to this.

For example, in an embodiment of the present application, the identifier of the end-to-end connection between UE1 and UE2 may include a combination of the source L2 identity of UE1 and the destination L2 identity of UE2; the identifier of the end-to-end connection between UE1 and UE2 may also include a combination of the source L2 identity of UE1 and the destination L2 identity of UE2, and the transmission type corresponding to the end-to-end communication between UE1 and UE2; the identifier of the end-to-end connection between UE1 and UE2 may also include a local identifier corresponding to the a combination of a source L2 identity of UE1 and a destination L2 identity of UE2; the identifier of the end-to-end connection between UE1 and UE2 may also include a local identifier corresponding to the combination of a source L2 identity of UE1 and a destination L2 identity of UE2, and a transmission type corresponding to the end-to-end communication between UE1 and UE2.

For example, before sending the first message to the network device, UE1 may first determine whether UE1 has established an end-to-end connection with UE2 through the relay terminal. In case of determining that UE1 has established an end-to-end connection with UE2 through the relay terminal, UE1 sends the first message to the network device, which may effectively avoid sending the first message to the network device in case that UE1 has not established an end-to-end connection with UE2 through the relay terminal, saving network transmission resources and reducing power consumption of the first terminal. The end-to-end connection includes a PC5-S connection or a PC5-radio resource control (RRC) connection.

As such, the end-to-end identifiers of different end-to-end connections are sent to the network device, which allows the network device to accurately identify, in combination with the end-to-end identifiers, data that passes through a same relay terminal but is sent to different destination L2 identities of target communication peers. This ensures that QoS flows with a same QoS profile under different end-to-end connections may be accurately mapped to different sidelink interface bearers and/or sidelink interface logical channels, ensuring that an adaptation layer may add a correct adaptation layer header, and improving a success rate of end-to-end transmission.

Step 2: the network device sends configuration information for the target object of the sidelink interface to UE1.

The configuration information includes a quality of service (QoS) flow identifier, and QoS flows with the same QoS flow identifier but different end-to-end identifiers are mapped to different target objects.

After receiving the first message sent from UE1, where the first message includes a destination layer 2 (L2) identity of a relay terminal and an end-to-end identifier, the network device may determine the configuration information for the target object of the sidelink interface based on the destination layer 2 (L2) identity of the relay terminal and the end-to-end identifier.

For example, in an embodiment of the present application, the configuration information above further includes at least one of:
a destination L2 identity of the relay terminal;
the end-to-end identifier;
configuration information for an end-to-end target object between UE1 and UE2;
configuration information for a target object of a sidelink interface between UE1 and the relay terminal; or
a mapping relationship between a target object of a sidelink interface between UE1 and the relay terminal, and a target object of a sidelink interface between the relay terminal and UE2.

In an embodiment, the end-to-end identifier includes at least one of:
a destination L2 identity of UE2;
a transmission type corresponding to an end-to-end communication between UE1 and UE2;
a local identifier corresponding to a destination L2 identity of UE2;
an identifier of an end-to-end connection between UE1 and UE2; or
a local identifier corresponding to an identifier of an end-to-end connection between UE1 and UE2;
where the transmission type is an end-to-end direct communication type, and the identifier of the end-to-end connection between UE1 and UE2 includes a combination of a source L2 identity of UE1 and a destination L2 identity of UE2.

Step 3: UE1 determines an association relationship between a downlink logical channel (LCH) and a logical channel group (LCG) identifier of the sidelink interface between UE1 and the relay terminal based on the configuration information.

It should be noted that, in an embodiment of the present application, for the method by which UE1 determines, based on the configuration information, an association relationship between an LCH and an LCG ID of the sidelink interface between UE1 and the relay terminal, reference may be made to the related art regarding a description of determining, based on the configuration information, an association relationship between an LCH and an LCG ID of the sidelink interface between UE1 and the relay terminal, which is not further described in the embodiments of the present application.

Step 4: the UE reports an SL BSR to the network device based on the determined association relationship between the LCH and the LCG ID of the sidelink interface between UE1 and the relay terminal.

Step 5: the network device determines the sidelink interface resource between UE1 and a UE-to-UE relay (U2U relay) based on the reported SL BSR.

It should be noted that, in an embodiment of the present application, for the method by which the network device determines the sidelink interface resource between UE1 and the relay terminal based on the reported SL BSR, reference may be made to the related art regarding a description of determining the sidelink interface resource between UE1 and the relay terminal based on the reported SL BSR, which is not further described in the embodiments of the present application.

In combination with the description of step 1 to 5 above, UE1 sends a first message to the network device, where the first message includes a destination layer 2 (L2) identity of a relay terminal and an end-to-end identifier, and the end-to-end identifier is used to distinguish different end-to-end connections between UE1 and UE2. The network device may accurately identify, in combination with the end-to-end identifier, data passes through a same relay terminal but sent to different destination L2 identities of target communication peers, and specifically determine and send configuration information for a target object of a sidelink interface to UE1 based on the destination layer 2 (L2) identity of a relay terminal and an end-to-end identifier. The UE reports the SL BSR to the network device, and the corresponding network device determines the sidelink interface resource between UE1 and the relay terminal based on the reported SL BSR. The sidelink interface resource between the terminal and the relay terminal may be accurately configured.

Step 6: the network device sends the sidelink interface resource between UE1 and the relay terminal to UE1.

Step 7: UE1 transmits data to the relay terminal through the sidelink interface resources between UE1 and the relay terminal.

Step 8: the relay terminal forwards the data received from UE1 to UE2, achieving the end-to-end communication between UE1 and UE2.

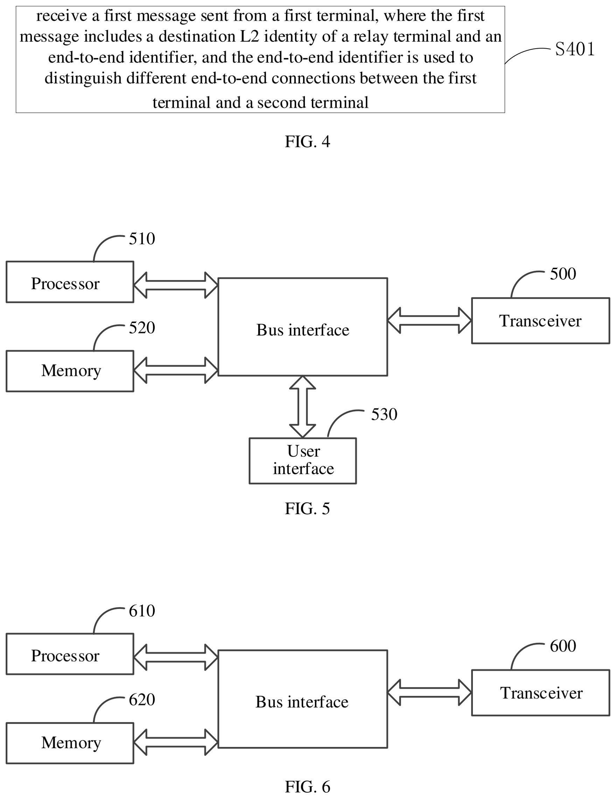

FIG. 4 is a third schematic flowchart of a method for sidelink interface message transmission according to an embodiment of the present application. This method is performed by a network device. For example, as shown in FIG. 4, this method includes:
S401: receive a first message sent from a first terminal, where the first message includes a destination layer 2 (L2) identity of a relay terminal and an end-to-end identifier, and the end-to-end identifier is used to distinguish different end-to-end connections between the first terminal and a second terminal.

The relay terminal is a relay terminal between the first terminal and the second terminal. An end-to-end connection exists between the first terminal and the second terminal, and a number of the second terminal is one or more.

For example, in an embodiment of the present application, the method for sidelink interface message transmission further includes:
sending configuration information for a target object of a sidelink interface to the first terminal, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

For example, in an embodiment of the present application, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

For example, in an embodiment of the present application, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

For example, in an embodiment of the present application, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

For example, in an embodiment of the present application, the first message is at least one of:
a sidelink (SL) user equipment message;
a user equipment assistance message; or
other additionally introduced messages.

For example, in an embodiment of the present application, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

In an embodiment of the present application, the implementation of the method for sidelink interface message transmission on the network device side is similar to the implementation of the method for sidelink interface message transmission on the first terminal side described above. Reference may be made to the implementation of the method for sidelink interface message transmission on the first terminal side described above, which is not described in detail in the embodiments of the present application.

FIG. 5 is a schematic structural diagram of a first terminal according to an embodiment of the present application. As shown in FIG. 5, the first terminal includes a memory 520, a transceiver 500 and a processor 510,
where the memory 520 is used for storing a computer program, the transceiver 500 is used for receiving and sending data under control of the processor 510, and the processor 510 is used for reading the computer program in the memory 520 and performing following operations:
sending a first message to a network device, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the transceiver 500 is used for receiving and sending data under control of the processor 510.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 500 may include multiple elements, i.e., including a transmitter and a receiver, units for providing communication with various other devices over transmission media including wireless channels, wired channels, fiber optic cables, and the like. For different user equipment, a user interface 530 may be an interface capable of externally or internally connecting the required equipment, and the connected equipment includes, but not limited to, a keypad, a display, a speaker, a microphone, a joystick, and the like.

The processor 510 is responsible for managing the bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA), or a complex programmable logic device (CPLD), the processor may also use a multi-core architecture.

The processor is used for performing any of the methods provided by the embodiments of the present application according to executable instructions obtained by calling the computer program stored in the memory. The processor and the memory may also be physically separated.

For example, in an embodiment of the present application, the method further includes:
receiving configuration information for a target object of a sidelink interface sent from the network device, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

For example, in an embodiment of the present application, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

For example, in an embodiment of the present application, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

For example, in an embodiment of the present application, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

For example, in an embodiment of the present application, the first message is at least one of:
a sidelink (SL) user equipment message;
a user equipment assistance message; or
other additionally introduced messages.

For example, in an embodiment of the present application, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

For example, in an embodiment of the present application, sending the first message to the network device includes:
in case of determining that the first terminal establishes an end-to-end connection with the second terminal through the relay terminal, sending the first message to the network device,
where the end-to-end connection includes a PC5-S connection or a PC5-radio resource control (RRC) connection.

It should be noted here that the above first terminal provided by the embodiments of the present application may implement all the method steps implemented by the above method embodiments performed by the first terminal, and may achieve the same effect. The same parts and beneficial effects as the same method embodiments are not repeated in the present application.

FIG. 6 is a schematic structural diagram of a network device according to an embodiment of the present application. As shown in FIG. 6, the network includes a memory 620, a transceiver 600 and a processor 610,
where the memory 620 is used for storing a computer program, the transceiver 600 is used for receiving and sending data under control of the processor 610, and the processor 610 is used for reading the computer program in the memory 620 and performing following operations:
receiving a first message sent from a first terminal, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

In an embodiment, the transceiver 600 is used for receiving and sending data under control of the processor 610.

In FIG. 6, a bus architecture may include any number of interconnected buses and bridges, which are linked together through various circuits of one or more processors represented by the processor 610 and one or more memories represented by the memory 620. The bus architecture may also link together various other circuits, such as peripherals, voltage regulators, and power management circuits, etc., which are well known in the art, and therefore are not further described in the present application. The bus interface provides an interface. The transceiver 600 may include multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

For example, in an embodiment of the present application, the method further includes:
sending configuration information for a target object of a sidelink interface to the first terminal, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

For example, in an embodiment of the present application, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

For example, in an embodiment of the present application, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

For example, in an embodiment of the present application, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

For example, in an embodiment of the present application, the first message is at least one of:
a sidelink (SL) user equipment message;
a user equipment assistance message; or
other additionally introduced messages.

For example, in an embodiment of the present application, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

It should be noted here that the above network device provided by the embodiments of the present application may implement all the method steps implemented by the above method embodiments performed by the network device, and may achieve the same effect. The same parts and beneficial effects as the same method embodiments are not repeated in the present application.

In addition, an embodiment of the present application further provides an apparatus for sidelink interface message transmission. The method for sidelink interface message transmission and the apparatus for sidelink interface message transmission are based on the same conception, and their principles for solving problems are similar. Therefore, for the implementation of the apparatus for sidelink interface message transmission and the method for sidelink interface message transmission, reference may be made to each other, and the repeated parts are not repeated.

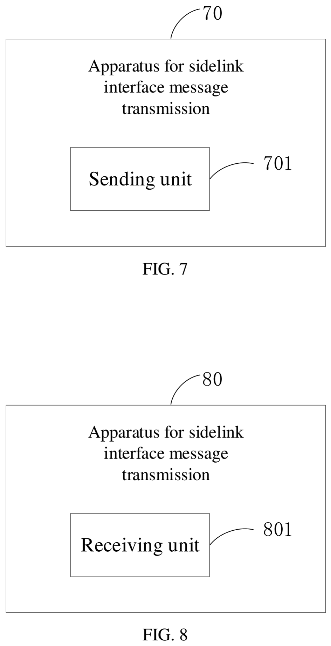

An embodiment of the present application further provides an apparatus for sidelink interface message transmission. for use in a first terminal. For example, FIG. 7 is a first schematic structural diagram of an apparatus for sidelink interface message transmission according to an embodiment of the present application, as shown in FIG. 7, the apparatus 70 for sidelink interface message transmission includes:
a sending unit 710, used for sending a first message to a network device, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

For example, in an embodiment of the present application, the apparatus further includes:
a receiving unit, used for receiving configuration information for a target object of a sidelink interface sent from the network device, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

For example, in an embodiment of the present application, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

For example, in an embodiment of the present application, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

For example, in an embodiment of the present application, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

For example, in an embodiment of the present application, the first message is at least one of:
a sidelink (SL) user equipment message;
a user equipment assistance message; or
other additionally introduced messages.

For example, in an embodiment of the present application, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

For example, in an embodiment of the present application, sending the first message to the network device includes:
in case of determining that the first terminal establishes an end-to-end connection with the second terminal through the relay terminal, sending the first message to the network device,
where the end-to-end connection includes a PC5-S connection or a PC5-radio resource control (RRC) connection.

It should be noted here that the apparatus 70 for sidelink interface message transmission provided by the embodiments of the present application may implement all the method steps implemented by the above method embodiments performed by the first terminal, and may achieve the same effect. The same parts and beneficial effects as the same method embodiments are not repeated in the present application.

An embodiment of the present application further provides an apparatus for sidelink interface message transmission, for use in a network device. For example, FIG. 8 is a second schematic structural diagram of an apparatus for sidelink interface message transmission according to an embodiment of the present application, as shown in FIG. 8, the apparatus 80 for sidelink interface message transmission includes:
a receiving unit 801, used for receiving a first message sent from a first terminal, where the first message includes a destination layer 2 (L2) identity of a relay terminal and an end-to-end identifier, and the end-to-end identifier is used to distinguish different end-to-end connections between the first terminal and a second terminal,
where the relay terminal is a relay terminal between the first terminal and the second terminal, an end-to-end connection exists between the first terminal and the second terminal, and a number of the second terminal is one or more.

For example, in an embodiment of the present application, the apparatus further includes:
a sending unit, used for sending configuration information for a target object of a sidelink interface to the first terminal, where the configuration information includes a quality of service (QoS) flow identifier, and QoS flows with a same QoS flow identifier but different end-to-end identifiers are mapped to different target objects,
where the target object includes at least one of:
   a sidelink interface bearer;
   a sidelink interface logical channel; or
   a sidelink interface PC5 radio link control (RLC) channel.

For example, in an embodiment of the present application, the end-to-end identifier includes at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
where the identifier of the end-to-end connection includes a combination of a source L2 identity of the first terminal and a destination L2 identity of the second terminal.

For example, in an embodiment of the present application, the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

For example, in an embodiment of the present application, the local identifier corresponding to the identifier of the end-to-end connection between the first terminal and the second terminal includes at least one of:
an identifier obtained by truncating or mapping the identifier of the end-to-end connection, where a number of bits occupied by the identifier is less than a number of bits occupied by the identifier of the end-to-end connection; or
a serial number of the end-to-end connection.

For example, in an embodiment of the present application, the first message is at least one of:
a sidelink (SL) user equipment message;
a user equipment assistance message; or
other additionally introduced messages.

For example, in an embodiment of the present application, the configuration information further includes at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

It should be noted here that the apparatus 80 for sidelink interface message transmission provided by the embodiments of the present application may implement all the method steps implemented by the above method embodiments performed by the network device, and may achieve the same effect. The same parts and beneficial effects as the same method embodiments are not repeated in the present application.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a processor-readable storage medium storing a computer program, where the computer program is used for causing a processor to perform any of the methods in the above embodiments, including:
sending a first message to a network device, where the first message includes a destination layer 2 (L2) identity of a relay terminal and an end-to-end identifier, and the end-to-end identifier is used to distinguish different end-to-end connections between the first terminal and a second terminal, where the relay terminal is a relay terminal between the first terminal and the second terminal, an end-to-end connection exists between the first terminal and the second terminal, and a number of the second terminal is one or more; or
receiving a first message sent from a first terminal, where the first message includes a destination layer 2 (L2) identity of a relay terminal and an end-to-end identifier, and the end-to-end identifier is used to distinguish different end-to-end connections between the first terminal and a second terminal, where the relay terminal is a relay terminal between the first terminal and the second terminal, an end-to-end connection exists between the first terminal and the second terminal, and a number of the second terminal is one or more.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for sidelink interface message transmission, performed by a first terminal, comprising:
sending a first message to a network device, wherein the first message comprises a destination layer 2 (L2) identity of a relay terminal and an end-to-end identifier, and the end-to-end identifier is used to distinguish different end-to-end connections between the first terminal and a second terminal,
wherein the relay terminal is a relay terminal between the first terminal and the second terminal, an end-to-end connection exists between the first terminal and the second terminal, and a number of the second terminal is one or more.

2. The method of claim 1, further comprising:
receiving configuration information for a target object of a sidelink interface sent from the network device, wherein the configuration information comprises a quality of service (QoS) flow identifier, and QoS flows with a same QoS flow identifier but different end-to-end identifiers are mapped to different target objects,
wherein the target object comprises at least one of:
a sidelink interface bearer;
a sidelink interface logical channel; or
a sidelink interface PC5 radio link control (RLC) channel.

3. The method of claim 1, wherein the end-to-end identifier comprises at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
wherein the identifier of the end-to-end connection comprises a combination of a source L2 identity of the first terminal and a destination L2 identity of the second terminal.

4. The method of claim 3, wherein the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

5. The method of claim 3, wherein the local identifier corresponding to the identifier of the end-to-end connection between the first terminal and the second terminal comprises at least one of:
an identifier obtained by truncating or mapping the identifier of the end-to-end connection, wherein a number of bits occupied by the identifier is less than a number of bits occupied by the identifier of the end-to-end connection; or
a serial number of the end-to-end connection.

6. The method of any of claims 1 to 5, wherein the first message is at least one of:
a sidelink (SL) user equipment message;
a user equipment assistance message; or
other additionally introduced messages.

7. The method of claim 2, wherein the configuration information further comprises at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

8. The method of any of claims 1 to 5, wherein sending the first message to the network device comprises:
in case of determining that the first terminal establishes an end-to-end connection with the second terminal through the relay terminal, sending the first message to the network device,
wherein the end-to-end connection comprises a PC5-S connection or a PC5-radio resource control (RRC) connection.

9. A method for sidelink interface message transmission, performed by a network device, comprising:
receiving a first message sent from a first terminal, wherein the first message comprises a destination layer 2 (L2) identity of a relay terminal and an end-to-end identifier, and the end-to-end identifier is used to distinguish different end-to-end connections between the first terminal and a second terminal,
wherein the relay terminal is a relay terminal between the first terminal and the second terminal, an end-to-end connection exists between the first terminal and the second terminal, and a number of the second terminal is one or more.

10. The method of claim 9, further comprising:
sending configuration information for a target object of a sidelink interface to the first terminal, wherein the configuration information comprises a quality of service (QoS) flow identifier, and QoS flows with a same QoS flow identifier but different end-to-end identifiers are mapped to different target objects,
wherein the target object comprises at least one of:
a sidelink interface bearer;
a sidelink interface logical channel; or
a sidelink interface PC5 radio link control (RLC) channel.

11. The method of claim 9, wherein the end-to-end identifier comprises at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
wherein the identifier of the end-to-end connection comprises a combination of a source L2 identity of the first terminal and a destination L2 identity of the second terminal.

12. The method of claim 11, wherein the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

13. The method of claim 11, wherein the local identifier corresponding to the identifier of the end-to-end connection between the first terminal and the second terminal comprises at least one of:
an identifier obtained by truncating or mapping the identifier of the end-to-end connection, wherein a number of bits occupied by the identifier is less than a number of bits occupied by the identifier of the end-to-end connection; or
a serial number of the end-to-end connection.

14. The method of any of claims 9 to 13, wherein the first message is at least one of:
a sidelink (SL) user equipment message;
a user equipment assistance message; or
other additionally introduced messages.

15. The method of claim 10, wherein the configuration information further comprises at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

16. A first terminal, comprising a memory, a transceiver and a processor,
wherein the memory is used for storing a computer program, the transceiver is used for receiving and sending data under control of the processor, and the processor is used for reading the computer program in the memory and performing following operations:
sending a first message to a network device, wherein the first message comprises a destination layer 2 (L2) identity of a relay terminal and an end-to-end identifier, and the end-to-end identifier is used to distinguish different end-to-end connections between the first terminal and a second terminal,
wherein the relay terminal is a relay terminal between the first terminal and the second terminal, an end-to-end connection exists between the first terminal and the second terminal, and a number of the second terminal is one or more.

17. The first terminal of claim 16, wherein the processor is further used for performing following operations:
receiving configuration information for a target object of a sidelink interface sent from the network device, wherein the configuration information comprises a quality of service (QoS) flow identifier, and QoS flows with a same QoS flow identifier but different end-to-end identifiers are mapped to different target objects,
wherein the target object comprises at least one of:
a sidelink interface bearer;
a sidelink interface logical channel; or
a sidelink interface PC5 radio link control (RLC) channel.

18. The first terminal of claim 16, wherein the end-to-end identifier comprises at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
wherein the identifier of the end-to-end connection comprises a combination of a source L2 identity of the first terminal and a destination L2 identity of the second terminal.

19. The first terminal of claim 18, wherein the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

20. The first terminal of claim 18, wherein the local identifier corresponding to the identifier of the end-to-end connection between the first terminal and the second terminal comprises at least one of:
an identifier obtained by truncating or mapping the identifier of the end-to-end connection, wherein a number of bits occupied by the identifier is less than a number of bits occupied by the identifier of the end-to-end connection; or
a serial number of the end-to-end connection.

21. The first terminal of any of claims 16 to 20, wherein the first message is at least one of:
a sidelink (SL) user equipment message;
a user equipment assistance message; or
other additionally introduced messages.

22. The first terminal of claim 17, wherein the configuration information further comprises at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

23. The first terminal of any of claims 16 to 20, wherein sending the first message to the network device comprises:
in case of determining that the first terminal establishes an end-to-end connection with the second terminal through the relay terminal, sending the first message to the network device,
wherein the end-to-end connection comprises a PC5-S connection or a PC5-radio resource control (RRC) connection.

24. A network device, comprising a memory, a transceiver and a processor,
wherein the memory is used for storing a computer program, the transceiver is used for receiving and sending data under control of the processor, and the processor is used for reading the computer program in the memory and performing following operations:
receiving a first message sent from a first terminal, wherein the first message comprises a destination layer 2 (L2) identity of a relay terminal and an end-to-end identifier, and the end-to-end identifier is used to distinguish different end-to-end connections between the first terminal and a second terminal,
wherein the relay terminal is a relay terminal between the first terminal and the second terminal, an end-to-end connection exists between the first terminal and the second terminal, and a number of the second terminal is one or more.

25. The network device of claim 24, wherein the processor is further used for performing following operations:
sending configuration information for a target object of a sidelink interface to the first terminal, wherein the configuration information comprises a quality of service (QoS) flow identifier, and QoS flows with a same QoS flow identifier but different end-to-end identifiers are mapped to different target objects,
wherein the target object comprises at least one of:
a sidelink interface bearer;
a sidelink interface logical channel; or
a sidelink interface PC5 radio link control (RLC) channel.

26. The network device of claim 24, wherein the end-to-end identifier comprises at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
wherein the identifier of the end-to-end connection comprises a combination of a source L2 identity of the first terminal and a destination L2 identity of the second terminal.

27. The network device of claim 26, wherein the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

28. The network device of claim 26, wherein the local identifier corresponding to the identifier of the end-to-end connection between the first terminal and the second terminal comprises at least one of:
an identifier obtained by truncating or mapping the identifier of the end-to-end connection, wherein a number of bits occupied by the identifier is less than a number of bits occupied by the identifier of the end-to-end connection; or
a serial number of the end-to-end connection.

29. The network device of any of claims 24 to 28, wherein the first message is at least one of:
a sidelink (SL) user equipment message;
a user equipment assistance message; or
other additionally introduced messages.

30. The network device of claim 25, wherein the configuration information further comprises at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

31. An apparatus for sidelink interface message transmission, for use in a first terminal, comprising:
a sending unit, used for sending a first message to a network device, wherein the first message comprises a destination layer 2 (L2) identity of a relay terminal and an end-to-end identifier, and the end-to-end identifier is used to distinguish different end-to-end connections between the first terminal and a second terminal,
wherein the relay terminal is a relay terminal between the first terminal and the second terminal, an end-to-end connection exists between the first terminal and the second terminal, and a number of the second terminal is one or more.

32. The apparatus of claim 31, further comprising:
a receiving unit, used for receiving configuration information for a target object of a sidelink interface sent from the network device, wherein the configuration information comprises a quality of service (QoS) flow identifier, and QoS flows with a same QoS flow identifier but different end-to-end identifiers are mapped to different target objects,
wherein the target object comprises at least one of:
a sidelink interface bearer;
a sidelink interface logical channel; or
a sidelink interface PC5 radio link control (RLC) channel.

33. The apparatus of claim 31, wherein the end-to-end identifier comprises at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
wherein the identifier of the end-to-end connection comprises a combination of a source L2 identity of the first terminal and a destination L2 identity of the second terminal.

34. The apparatus of claim 33, wherein the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

35. The apparatus of claim 33, wherein the local identifier corresponding to the identifier of the end-to-end connection between the first terminal and the second terminal comprises at least one of:
an identifier obtained by truncating or mapping the identifier of the end-to-end connection, wherein a number of bits occupied by the identifier is less than a number of bits occupied by the identifier of the end-to-end connection; or
a serial number of the end-to-end connection.

36. The apparatus of any of claims 31 to 35, wherein the first message is at least one of:
a sidelink (SL) user equipment message;
a user equipment assistance message; or
other additionally introduced messages.

37. The apparatus of claim 32, wherein the configuration information further comprises at least one of:
a destination L2 identity of the relay terminal;
the end-to-end identifier;
configuration information of for end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

38. The apparatus of any of claims 31 to 35, wherein sending the first message to the network device comprises:
in case of determining that the first terminal establishes an end-to-end connection with the second terminal through the relay terminal, sending the first message to the network device,
wherein the end-to-end connection comprises a PC5-S connection or a PC5-radio resource control (RRC) connection.

39. An apparatus for sidelink interface message transmission, for use in a network device, comprising:
a receiving unit, used for receiving a first message sent from a first terminal, wherein the first message comprises a destination layer 2 (L2) identity of a relay terminal and an end-to-end identifier, and the end-to-end identifier is used to distinguish different end-to-end connections between the first terminal and a second terminal,
wherein the relay terminal is a relay terminal between the first terminal and the second terminal, an end-to-end connection exists between the first terminal and the second terminal, and a number of the second terminal is one or more.

40. The apparatus of claim 39, further comprising:
a sending unit, used for sending configuration information for a target object of a sidelink interface to the first terminal, wherein the configuration information comprises a quality of service (QoS) flow identifier, and QoS flows with a same QoS flow identifier but different end-to-end identifiers are mapped to different target objects,
wherein the target object comprises at least one of:
a sidelink interface bearer;
a sidelink interface logical channel; or
a sidelink interface PC5 radio link control (RLC) channel.

41. The apparatus of claim 39, wherein the end-to-end identifier comprises at least one of:
a destination L2 identity of the second terminal;
a transmission type corresponding to an end-to-end communication between the first terminal and the second terminal;
a local identifier corresponding to a destination L2 identity of the second terminal;
an identifier of an end-to-end connection between the first terminal and the second terminal; or
a local identifier corresponding to an identifier of an end-to-end connection between the first terminal and the second terminal;
wherein the identifier of the end-to-end connection comprises a combination of a source L2 identity of the first terminal and a destination L2 identity of the second terminal.

42. The apparatus of claim 41, wherein the local identifier corresponding to the destination L2 identity of the second terminal is an identifier obtained by truncating or mapping the destination L2 identity of the second terminal, and a number of bits occupied by the local identifier corresponding to the destination L2 identity of the second terminal is less than a number of bits occupied by the destination L2 identity of the second terminal.

43. The apparatus of claim 41, wherein the local identifier corresponding to the identifier of the end-to-end connection between the first terminal and the second terminal comprises at least one of:
an identifier obtained by truncating or mapping the identifier of the end-to-end connection, wherein a number of bits occupied by the identifier is less than a number of bits occupied by the identifier of the end-to-end connection; or
a serial number of the end-to-end connection.

44. The apparatus of any of claims 39 to 43, wherein the first message is at least one of:
a sidelink (SL) user equipment message;
a user equipment assistance message; or
other additionally introduced messages.

45. The apparatus of claim 40, wherein the configuration information further comprises at least one of:
a destination L2 identity of the relay terminal;
the end-to-end identifier;
configuration information for an end-to-end target object between the first terminal and the second terminal;
configuration information for a target object of a sidelink interface between the first terminal and the relay terminal; or
a mapping relationship between a target object of a sidelink interface between the first terminal and the relay terminal and a target object of a sidelink interface between the relay terminal and the second terminal.

46. A processor-readable storage medium storing a computer program, wherein the computer program is used for causing a processor to perform the method of any of claims 1 to 8, or perform the method of any of claims 9 to 15.
